# EUROPÄISCHE PATENTSCHRIFT

(11) **EP 0 922 894 B1**
(45) Veröffentlichungstag und Bekanntmachung des Hinweises auf die Patenterteilung: **19.12.2001**
(21) Anmeldenummer: 98113161.8
(22) Anmeldetag: 15.07.1998
(51) Int. Cl.: F16K 31/06, H01F 7/08

(54) **Magnetanker**
Magnet armature
Armature d'aimant

(30) Priorität: 09.12.1997 DE 19754525
(43) Veröffentlichungstag der Anmeldung: 16.06.1999
(73) Patentinhaber: Firma Carl Freudenberg, 69469 Weinheim (DE)
(72) Erfinder: Zabeck, Sebastian, 69488 Birkenau (DE); Heinemann, Joachim, 69517 Gorxheimertal (DE); Engel, Jürgen, 64407 Fränkisch-Crumbach (DE)

(56) Entgegenhaltungen:
- DE-A- 4 309 739
- US-A- 5 246 199

## Beschreibung

### Technisches Gebiet

### Stand der Technik

Die Erfindung betrifft einen Magnetanker für ein elektromagnetisch betätigbares Ventil mit einem Dichtkörper, der dichtend mit einem Ventilsitz in Eingriff bringbar ist, wobei auf der dem Dichtkörper abgewandten Stirnseite Anschlagpuffer aus elastomerem Werkstoff angeordnet sind und wobei die Anschlagpuffer jeweils einen sich in Öffnungsrichtung verringernden Querschnitt zur Erzielung einer progressiven Federcharakteristik aufweisen.

Ein solcher Magnetanker ist aus der US 5,467,961, Figuren 1 bis 3 bekannt. Der Magnetanker und der Dichtkörper sind formschlüssig miteinander verbunden, wobei die Anschlagpuffer als Endlagendämpfung vorgesehen und einstückig ineinander übergehend mit dem Dichtkörper ausgebildet sind.

Ein weiterer Magnetanker ist aus der DE 43 09 739 A1 bekannt. Innerhalb eines Ventilgehäuses ist eine ringförmig ausgebildete Magnetspule angeordnet, die einen in axialer Richtung hin- und herbewegbaren Magnetanker umfangsseitig umschließt, wobei der Magnetanker im Bereich seiner einen Stirnseite durch ein Federelement elastisch gegen einen als Widerlager ausgebildeten Magnetkern abgestützt ist. Auf der dem Dichtkörper abgewandten Seite des Magnetankers ist ein kreisringförmiger Anschlagpuffer zur Reduzierung von Anschlaggeräuschen bei Extremauslenkungen des relativ beweglichen Magnetankers bezogen auf den Magnetkern vorgesehen.

### Darstellung der Erfindung

Der Erfindung liegt die Aufgabe zugrunde, einen Magnetanker der eingangs genannten Art derart weiterzuentwickeln, daß eine stufenförmige, diskontinuierliche Bedämpfung der Bewegung des Magnetankers erzielt wird, daß die Taktgeräusche des Ventils weiter reduziert werden und daß der Hub des Magnetankers abhängig von der Pulsweite oder dem Tastverhältnis selbsttätig variiert.

Diese Aufgabe wird mit den Merkmalen von Anspruch 1 gelöst. Auf vorteilhafte Ausgestaltungen nehmen die Unteransprüche Bezug.

Zur Lösung der Aufgabe ist es vorgesehen, daß die nockenförmigen Anschlagpuffer zur Erzielung einer stufenförmigen, diskontinuierlichen Bedämpfung der Bewegung des Magnetankers voneinander abweichende Höhen aufweisen und daß jeweils zumindest drei Anschlagpuffer gleicher Höhe gleichmäßig in Umfangsrichtung verteilt angeordnet sind. Die Intensität der Anschlaggeräusche eines Magnetankers an einem in Öffnungsrichtung angrenzenden Magnetkern und/oder dem Ventilsitz ist abhängig von den auf den Magnetanker wirksamen Kräften. Diese Kräfte können beispielsweise durch die Federkraft gebildet sein, mit der ein stromlos geschlossenes Ventil aus seiner Offenstellung bei Abschalten der Strombeaufschlagung auf den Ventilsitz gedrückt wird, durch die Magnetkraft, die den Magnetanker bei Strombeaufschlagung in Offenrichtung bewegt, durch hydraulische Kräfte des Mediums z.B. am Ventilsitz und/oder Reibungskräfte an der Oberfläche des Magnetankers. Außerdem verhält sich die Intensität der Geräusche proportional zum Ventilhub.

Unter pulsweitenmoduliert angesteuerten Ventilen sind Ventile zu verstehen, die intermittierend angesteuert werden. Die von der Ansteuerfrequenz vorgegebene Periodendauer kann stufenlos in "Auf" und "Zu" unterteilt werden. Unter einem Tastverhältnis ist das Verhältnis aus Öffnungszeit zu Periodendauer zu verstehen .

Die Höhe der Anschlagpuffer bestimmt die Hubeinschränkung des Magnetankers und überdeckt einen Teil des Gesamthub-Bereichs, wobei sich der Gesamthub aus der Summe des freien Hubs und des gedämpften Hubs zusammensetzt. Die Höhe der Anschlagnoppen entspricht dabei dem gedämpften Hub. Die Größe des gedämpften Hubs von pulsweitenmoduliert angesteuerten Magnetventilen liegt im Bereich bis 1,5 mm.

Die progressive Federcharakteristik der Anschlagnoppen ist vorteilhaft, weil auch die Kraft-Wegkennlinie von elektromagnetisch betätigbaren Ventilen ein Verhalten aufweist, das durch einen progressiven Kraftzuwachs bei kleiner werdendem Weg/Hub gekennzeichnet ist. Um sich diesem Verhalten optimal anzupassen, weisen die Anschlagpuffer ebenfalls eine progressive Federcharakteristik auf, wobei die Anschlagpuffer der Bewegung des Magnetankers mit größer werdender Einfederung eine höhere Kraft entgegensetzen.

Durch die progressive Federcharakteristik und die erfindungsgemäße Ausgestaltung der Anschlagpuffer wird zusätzlich zu der rein statischen Bedämpfung bei konstantem Hub des Ventils eine ansteuerungsabhängige Hubveränderung realisiert. Im Bereich niedriger Tastverhältnisse ist die auf den Magnetanker wirksame Kraft geringer als bei hohen Tastverhältnissen, was beispielsweise an den voneinander abweichenden mittleren Stromaufnahmen der Magnetspule abgelesen werden kann.

Die Anschlagpuffer sind so ausgelegt, daß die Magnetkraft bei niedrigen Tastverhältnissen nicht ausreicht, die Anschlagpuffer derart zu verformen, daß der Nennhub des Magnetankers vollständig erreicht wird. Erst bei Tastverhältnissen ab etwa 30%, bei einer Taktfrequenz von 10 Hz und Nennspannung, wird der Nennhub erreicht. Ab der Ansprechschwelle des Magneten bei Tastverhältnissen von etwa 5% bis 30%, ist die Federkennlinie des Anschlagpuffers so, daß der Hub des Magnetankers zwischen dem minimalen Mindesthub und dem Nennhub proportional zum Tastverhältnis ist.

Die ansteuerungsabhängige Hubveränderung ist insbesondere dann vorteilhaft, wenn der erfindungsgemäße Magnetanker in Aktivkohlefilterventilen von Kraftfahrzeugen zur Anwendung gelangt, beispielsweise zur Rückführung flüchtiger Kraftstoffbestandteile aus der Tankanlage in das Saugrohr einer Verbrennungskraftmaschine. Der ansteuerungsabhängige Betriebsbereich des Magneten befindet sich im leerlaufnahen Bereich des Motors, in dem Geräuschemissionen des elektromagnetisch betätigbaren Ventils besonders kritisch sind, weil der Motor einerseits mit geringer Drehzahl leise läuft und andererseits durch die hohen Ansaugrohrunterunterdrücke die Beschleunigungskräfte auf den Magnetanker besonders hoch sind.

Ein weiterer Vorteil wird dadurch erzielt, daß bei verringertem Hub des Magnetankers die Dosierfähigkeit des Ventils verbessert ist. Eine gute Dosierfähigkeit ist insbesondere im leerlaufnahen Bereich des Motors von entscheidender Wichtigkeit.

Besteht der Anschlagpuffer aus einem geeignetem Elastomer, beispielsweise aus Fluorpolymerisaten (FPM), weist der Magnetanker durch die erfindungsgemäße Ausgestaltung der Anschlagpuffer außerdem eine temperaturabhängige Hubveränderung auf. Durch die Verwendung eines derartigen Materials wird die Funktion des Ventils bei niedrigen Temperaturen dahingehend beeinflußt, daß der Hub geringer ist, als bei höheren Temperaturen, da diese Materialien üblicherweise bei Temperaturen von weniger als 0°C verhärten und somit die Federcharakteristik verändern. Auch die temperaturabhängige Veränderung ist insbesondere bei Aktivkohlefilterventilen von Vorteil, da bei niedrigen Temperaturen durch die temperaturabhängige Reduzierung des Hubs das Geräusch im gesamten Kaltbetrieb des Motors reduziert wird. Steigt die Temperatur im Dämpfungsbereich demgegenüber beispielsweise durch die Bestromung des Ventils an, wird das Laufgeräusch des Ventils durch einen allmählich weicher werdenden elastomerem Werkstoff wieder geringer.

Noppenförmig ausgebildete Anschlagpuffer mit sich in Öffnungsrichtung verringerndem Querschnitt sind besonders vorteilhaft, da durch ihre kalottenförmige Gestalt ein Abfedern und somit ein zeitlich verzögerter Kraftabbau in Abhängigkeit von den jeweiligen Gegebenheiten des Anwendungsfalles ermöglicht wird.

Die Anschlagpuffer weisen zur Erzielung einer stufenförmigen, diskontinuierlichen Bedämpfung des Magnetankers voneinander abweichende Höhen auf, wobei jeweils zumindest drei Anschlagpuffer gleicher Höhe gleichmäßig in Umfangsrichtung verteilt angeordnet sind. Die Anschlagpuffer gleicher Höhe sind bevorzugt übereinstimmend ausgebildet. Dadurch, daß die Anschlagpuffer einer jeden Stufe eine gleiche Höhe aufweisen, wird ein Kippen des Magnetankers beim Aufsetzen der Noppen auf dem Magnetkern verhindert.

Aus fertigungstechnischen Gründen sollte die Anzahl der Stufen drei nicht überschreiten. Durch die übereinstimmende Ausgestaltung der Anschlagpuffer jeweils einer Stufe, weisen diese jeweils ein identisches Betriebsverhalten auf.

Die Anschlagpuffer können eine Höhe in Öffnungsrichtung aufweisen, die 0,1 bis 1,5, bevorzugt 0,4 bis 0,5 mm beträgt. Bei einer derartigen Auslegung hat es sich als vorteilhaft bewährt, wenn die gedämpfte Höhe 0,4 bis 0,5 mm und die freie Höhe 0,1 bis 0,2 mm beträgt.

Eine in fertigungstechnischer Hinsicht einfache Gestalt der Anschlagnoppen ist gegeben, wenn diese im Querschnitt betrachtet im wesentlichen pyramidenstumpfförmig ausgebildet sind. Eine progressive Federcharakteristik läßt sich dadurch besonders einfach erzielen. Nach einer davon abweichenden Ausgestaltung besteht auch die Möglichkeit, Anschlagnoppen vorzusehen, die im Querschnitt betrachtet, im wesentlichen kegelstumpfförmig ausgebildet sind.

Es hat sich als vorteilhaft bewährt, wenn die Innenflächen der Anschlagpuffer mit einer in Öffnungsrichtung angeordneten Achse einen Winkel von 10 bis 45, bevorzugt 20 bis 30° einschließt. Als Innenflächen der Anschlagpuffer werden die Flächen bezeichnet, die bei rotationssymmetrischer Gestalt des Magnetankers jeweils radial innen angeordnet sind. Bei rotationssymmetrischen Bauteilen entspricht eine in Öffnungsrichtung angeordnete Achse der Symmetrieachse. Prinzipiell reicht es aus, eine der Flächen, beispielsweise in diesem Fall die Innenflächen der Anschlagpuffer, relativ zur Achse geneigt anzuordnen, um eine progressive Federcharakteristik zu erhalten. Davon abweichende Ausgestaltungen, bei denen beispielsweise die Anschlagpuffer in Öffnungsrichtung kegelförmig verjüngt ausgebildet sind, sind ebenfalls denkbar.

Der Magnetanker ist bevorzugt mit einer sich in Öffnungsrichtung erstreckenden, zentralen Durchbrechung versehen, die von elastomerem Werkstoff vollständig ausgefüllt ist, wobei der Dichtkörper und die Anschlagpuffer einstückig ineinanderübergehend und materialeinheitlich ausgebildet sind. Hierbei ist von Vorteil, daß der Magnetanker besonders einfach und kostengünstig herstellbar ist. Sowohl der Dichtkörper als auch die Anschlagpuffer werden in einem einzigen Arbeitsgang mit dem metallischen Werkstoff des Magnetankers verbunden.

Der erfindungsgemäße Magnetanker wird nachfolgend anhand der Zeichnungen weiter erläutert.

### Kurzbeschreibung der Zeichnung

Diese zeigen jeweils in schematischer Darstellung:
- Fig. 1:: Einen Ausschnitt aus einem elektromagnetisch betätigbaren Ventil, in dem der erfindungsgemäße Magnetanker zur Anwendung gelangt.
- Fig. 2:: Den Magnetanker aus Fig. 1 in geschnittener Darstellung.
- Fig. 3:: Den Magnetanker aus Fig. 2 in einer Draufsicht.

### Ausführung der Erfindung

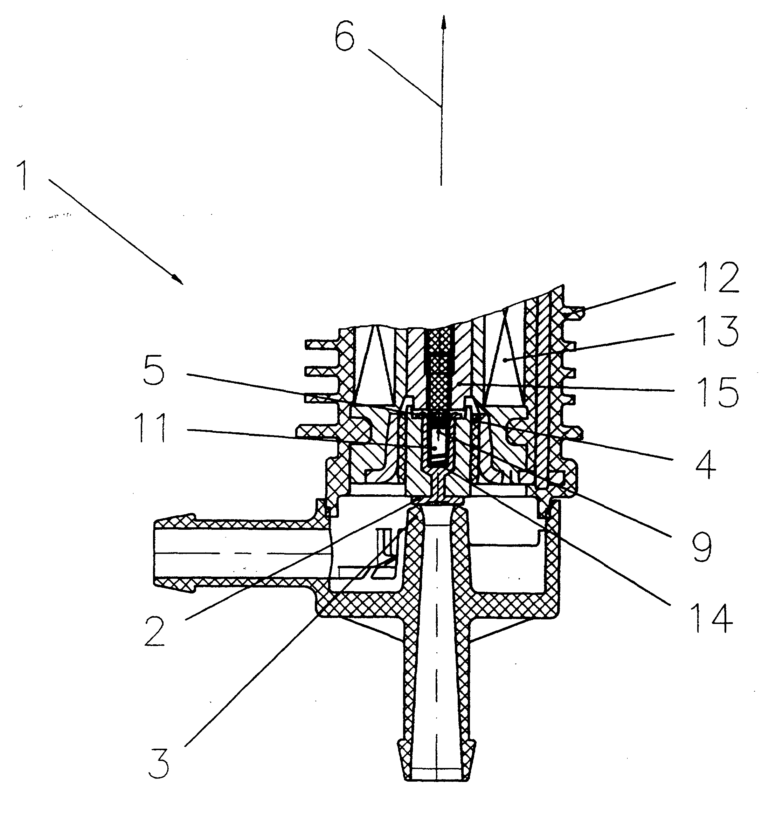

In Fig. 1 ist ein Ausschnitt aus einem elektromagnetisch betätigbaren Ventil 1 gezeigt, umfassend eine in einem Gehäuse 12 angeordnete, ringförmig ausgebildet Magnetspule 13, die den in axialer Richtung hin- und herbewegbaren Magnetanker, der aus einem metallischen Werkstoff besteht, umschließt. Der Magnetanker ist mit einem Dichtkörper 2 aus elastomerem Werkstoff verbunden, der im hier gezeigten, stromlosen Zustand den Ventilsitz 3 dichtend berührt. Der Magnetanker wird durch sein Eigengewicht und durch die Kraft der mit dem Bezugszeichen 14 versehenen Feder gegen den Ventilsitz 3 gedrückt.

Auf der dem Dichtkörper 2 abgewandten Stirnseite 4 des Magnetankers sind in diesem Ausführungsbeispiel vier gleichmäßig in Umfangsrichtung verteilte Anschlagpuffer 5 aus elastomerem Werkstoff angeordnet, die einen sich in Öffnungsrichtung 6 verringernden Querschnitt zur Erzielung einer progressiven Federcharakteristik aufweisen. Wird die Magnetspule 13 bestromt, bewegt sich der Magnetanker in Öffnungsrichtung 6, hebt vom Ventilsitz 3 ab und berührt unter Stauchung der Feder 14 mit seinen Anschlagpuffern 5 den Magnetkern 15.

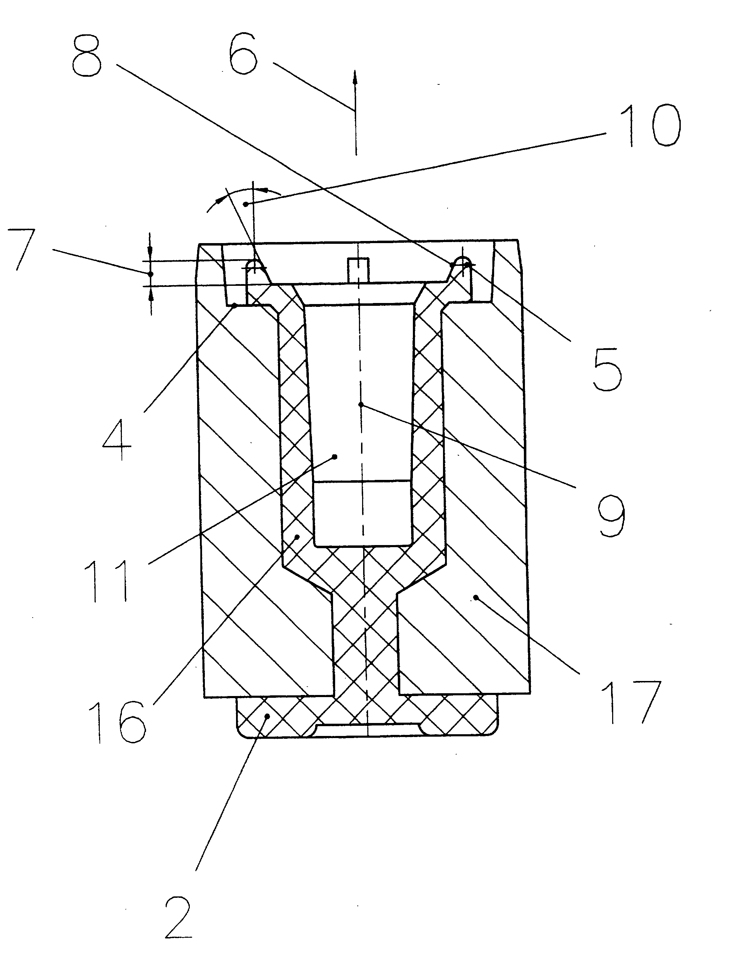

In Fig. 2 ist der Magnetanker aus Fig. 1 in geschnittener Darstellung vergrößert gezeigt. Der Magnetanker ist in diesem Ausführungsbeispiel rotationssymmetrisch ausgebildet und besteht aus einem Gummi-Metall-Teil, wobei das Metallteil 17 im wesentlichen hohlzylinderförmig ausgebildet ist und das Gummiteil 16 außenumfangsseitig umschließt.

In der hier gezeigten Darstellung sind zwei der vier Anschlagpuffer 5 geschnitten und einer der Anschlagpuffer 5 in einer Ansicht gezeigt. Es ist zu erkennen, daß die Anschlagpuffer 5 jeweils einen sich in Öffnungsrichtung 6 verringernden Querschnitt aufweisen. Der in diesem Ausführungsbeispiel verwendete Werkstoff ist FPM. Die Anschlagpuffer 5 sind jeweils übereinstimmend ausgebildet und weisen eine Höhe 7 von jeweils 0,5 mm auf, wobei der Winkel 10, den die Innenflächen 8 mit der Achse 9 begrenzt, 25° beträgt.

Das Metallteil 17 ist mit der zentralen Durchbrechung 11 versehen, die zumindest teilweise mit dem elastomeren Werkstoff der Anschlagpuffer 5 und des Dichtkörper 2 ausgefüllt ist.

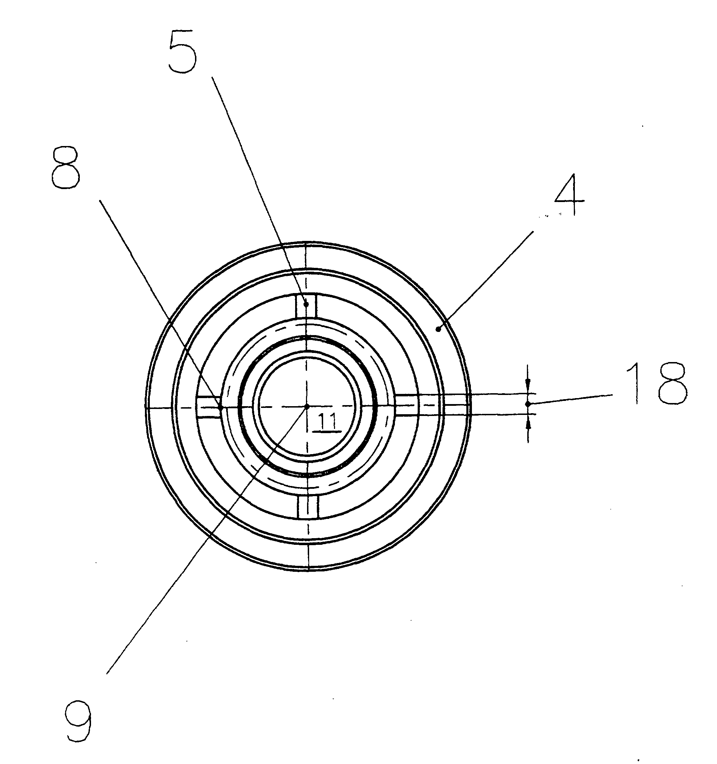

In Fig. 3 ist der Magnetanker aus Fig. 2 in einer Draufsicht gezeigt, wobei die vier übereinstimmend ausgebildeten Anschlagpuffer 5 zu erkennen sind, die einander jeweils im Abstand von 90° benachbart zugeordnet sind. Die Anschlagpuffer 5 weisen in Umfangsrichtung ein Breite 18 auf, die im wesentlichen der Höhe 7 der Anschlagpuffer 5 entspricht.

## Patentansprüche

1. Magnetanker für ein elektromagnetisch betätigbares Ventil (1), mit einem Dichtkörper (2), der dichtend mit einem Ventilsitz (3) in Eingriff bringbar ist, wobei auf der dem Dichtkörper (2) abgewandten Stirnseite (4) Anschlagpuffer aus elastomerem Werkstoff angeordnet sind, die jeweils einen sich in Öffnungsrichtung (6) verringernden Querschnitt zur Erzielung einer progressiven Federcharakteristik aufweisen, **dadurch gekennzeichnet, daß** die nockenförmigen Anschlagpuffer (5) zur Erzielung einer stufenförmigen, diskontinuierlichen Bedämpfung der Bewegung des Magnetankers voneinander abweichende Höhen (7) aufweisen und daß jeweils zumindest drei Anschlagpuffer (5) gleicher Höhe (7) gleichmäßig in Umfangsrichtung verteilt angeordnet sind.

2. Magnetanker nach Anspruch 1, **dadurch gekennzeichnet, daß** Anschlagpuffer (5) gleicher Höhe (7) übereinstimmend ausgebildet sind.

3. Magnetanker nach einem der Ansprüche 1 oder 2, **dadurch gekennzeichnet, daß** die Anschlagpuffer (5) eine Höhe (7) in Öffnungsrichtung (6) aufweisen, die 0,1 bis 1,5 mm beträgt.

4. Magnetanker nach einem der Ansprüche 1 bis 3, **dadurch gekennzeichnet, daß** die Anschlagpuffer (5) im Querschnitt betrachtet, im wesentlichen pyramidenstumpfförmig ausgebildet sind.

5. Magnetanker nach Anspruch 4, **dadurch gekennzeichnet, daß** die Innenflächen (8) der Anschlagpuffer (5) mit einer in Öffnungsrichtung (6) angeordneten Achse (9) einen Winkel (10) von 10 bis 45° einschließen.

6. Magnetanker nach einem der Ansprüche 1 bis 5, **gekennzeichnet durch** eine sich in Öffnungsrichtung (6) erstreckende, zentrale Durchbrechung (11), die von elastomerem Werkstoff vollständig ausgefüllt ist und **dadurch**, daß der Dichtkörper (2) und die Anschlagpuffer (5) einstückig ineinander übergehend und materialeinheitlich ausgebildet sind.

## Claims

1. A magnet armature for an electromagnetically actuable valve (1), having a sealing body (2) which can be brought into engagement in a sealing manner with a valve seat (3), there being arranged, on the end (4) which faces away from the sealing body (2), stop buffers of elastomeric material which each have a cross section which decreases in the opening direction (6) in order to obtain a progressive spring characteristic, **characterized in that**, in order to obtain a stepwise, discontinuous damping of the movement of the magnet armature, the cam-shaped stop buffers (5) have heights (7) differing from one another, and **in that** in each case at least three stop buffers (5) of identical height (7) are distributed uniformly in the circumferential direction.

2. A magnet armature according to claim 1, **characterized in that** stop buffers (5) of identical height (7) are of corresponding design.

3. A magnet armature according to either of claims 1 and 2, **characterized in that** the stop buffers (5) have a height (7) in the opening direction (6) which is from 0.1 to 1.5 mm.

4. A magnet armature according to any of claims 1 to 3, **characterized in that** the stop buffers (5), as viewed in cross section, are designed essentially in the form of a truncated pyramid.

5. A magnet armature according to claim 4, **characterized in that** the inner surfaces (8) of the stop buffers (5) enclose an angle (10) of 10 to 45° with an axis (9) arranged in the opening direction (6).

6. A magnet armature according to any of claims 1 to 5, **characterized by** a central aperture (11) which extends in the opening direction (6) and is completely filled by elastomeric material, and in that the sealing body (2) and the stop buffers (5) are designed such that they merge integrally into one another and are made of the same material.

## Revendications

1. Armature magnétique pour une vanne (1) à actionnement électromagnétique, comprenant un corps d'étanchéité (2) pouvant être mis en prise avec un siège de vanne (3) de manière à assurer l'étanchéité, sur la face (4) opposée au corps d'étanchéité (2) étant agencés des tampons de butée en matériau élastomère, qui ont chacun une section qui diminue dans le sens d'ouverture (6) pour obtenir une caractéristique de ressort progressive, **caractérisée en ce que** les tampons de butée (5) de forme saillante ont des hauteurs (7) différentes pour obtenir un amortissement discontinu, par palier du mouvement de l'armature magnétique et **en ce qu'**à chaque fois au moins trois tampons de butée (5) de même hauteur (7) sont uniformément répartis dans le sens circonférentiel.

2. Armature magnétique selon la revendication 1, **caractérisée en ce que** les tampons de butée (5) de même hauteur (7) sont de forme concordante.

3. Armature magnétique selon l'une des revendications 1 ou 2, **caractérisée en ce que** les tampons de butée (5) ont une hauteur (7) dans le sens d'ouverture (6), qui est comprise entre 0,1 et 1,5 mm.

4. Armature magnétique selon l'une des revendications 1 à 3, **caractérisée en ce que** les tampons de butée (5), vus en coupe transversale, sont réalisés essentiellement en forme de pyramide tronquée.

5. Armature magnétique selon la revendication 4, **caractérisée en ce que** les faces internes (8) des tampons de butée (5) enferment avec un axe (9) placé dans le sens d'ouverture (6) un angle (10) de 10 à 45°.

6. Armature magnétique selon l'une des revendications 1 à 5, **caractérisée par** un creux central (11) s'étendant dans le sens d'ouverture (6), qui est entièrement rempli de matériau élastomère, et en ce que le corps d'étanchéité (2) et les tampons de butée (5) sont réalisés en une pièce en se fondant l'un dans l'autre, et dans une matière homogène.
